# EUROPEAN PATENT APPLICATION

(11) **EP 1 300 067 A2**
(43) Date of publication of application: **09.04.2003**
(21) Application number: 02079051.5
(22) Date of filing: 02.10.2002
(51) Int. Cl.: A01K 1/00

(54) **A gate assembly for use in animal circulation**

(30) Priority: 05.10.2001 NL 1019118
(71) Applicant: Lely Enterprises AG, 6300 ZUG (CH)
(72) Inventor: Fransen, Renatus Ignatius Josephus, 3135 ZD Vlaardingen (NL); van der Kooy, Huibert Anton, 3155 CD Maasland (NL)
(74) Representative: Corten, Maurice Jean F.M.

(57) **Abstract**

An assembly of a gate (1) for use in animal circulation, a gate-unlocking device (5), an unlocking-signal-generating device for generating an unlocking signal, and a first area (2) and a second area (3) between which the gate (1) can be disposed. The gate (1) is designed for providing passage from the second (3) to the first (2) area when the gate-unlocking device (5) is released by an unlocking signal coming from the unlocking-signal-generating device. The assembly is provided with a device (12) for determining on which side of the gate (1) an animal (4) is located, and for emitting a gate side signal, the unlocking signal being at any rate at least partially determined by the gate side signal.

## Description

The invention relates to an assembly of a gate for use in animal circulation, a gate-unlocking device, an unlocking-signal-generating device for generating an unlocking signal, and a first area and a second area between which the gate can be disposed, according to the preamble of Claim 1.

Such an assembly is known from International Patent Application WO 01/08468. The gate used in this known assembly is designed for providing free passage from the first to the second area at all times, is spring-loaded in order to assume a closed position, and contains a locking device for locking the gate. The locking device can be unlocked in response to the approach of an animal that is identified in order to gain passage. The approach of an animal is determined by an animal-recognition device, which is known per se, and which is disposed on the gate or at the side of the gate in the second area. A disadvantage of this known assembly is that, in particular if many animals are located in the region of the gate, the gate does not function in the optimum manner. The animal-recognition system would then recognize a particular animal that is allowed to pass through the gate, and would therefore unlock the gate. However, this particular animal does not necessarily have the inclination to go through the gate, but is simply present in the vicinity of the gate. Since, however, the gate has been unlocked, another animal can now go through the gate, an animal that really should not be allowed passage. It is a further disadvantage that it is not clear whether an animal does actually go through the gate after unlocking of the gate.

One object of the invention is to provide an assembly of a gate for use in animal circulation, a gate-unlocking device, an unlocking-signal-generating device for generating an unlocking signal, and a first and a second area between which the gate can be disposed, by means of which assembly at least one of the above-mentioned disadvantages is at least largely overcome.

To this end, an assembly of the type described above according to the invention comprises the measures of the characterizing part of Claim 1. Owing to the fact that the assembly is provided with a gate-side-determining device, it is possible to gain a clearer indication of whether an animal wishes to go from one area to the other area.

In one embodiment of an assembly according to the invention, the gate-side-determining device is a position-determining device for determining the position of an animal relative to the gate, and for emitting a position signal as gate side signal, by means of which, inter alia, the distance from the animal to the gate can be determined. The position signal can therefore indicate whether the animal is actually close to the gate, which can be a stronger indication that the animal wants to go through the gate. In particular, the unlocking signal is not emitted until this position signal indicates that an animal is within a certain minimum distance from the gate. This means that signals coming from animals that are too far away from the gate actually to make use of it, but in the case of the known assembly are still recognized by an animal-recognition system, can be ignored.

In order to obtain an even more accurate indication of whether an animal wishes to make use of the gate, in one embodiment of an assembly according to the invention the gate-side-determining device is an approach-determining device for determining the direction from which the animal is approaching the gate. Such an approach-determining device can provide an indication of whether an animal is actually moving towards the gate. Such an approach-determining device can, for example, be formed by three animal-recognition devices placed at a distance from one another, for example one being placed on the gate itself, and the other two being disposed on either side of the gate.

A compact assembly by means of which the direction from which the animal is approaching the gate can be determined is obtained if the approach-determining device is an angle sensor that is integral with the gate. With such an angle sensor, the direction in which the gate is being pushed by an animal can be determined. This is a strong indication that an animal wishes to go through the gate. In order to ensure that an accidental push against the gate does not cause the angle sensor to generate an unlocking signal, in one embodiment of the assembly according to the invention it is preferable for the assembly to be provided with a device for detecting how long the angle sensor detects an angular deflection and/or the number of times within a certain period of time that the angle sensor detects an angular deflection. The relevant components can therefore be set in such a way that an unlocking signal is emitted only if an angular deflection is detected for a certain minimum duration and/or a certain minimum number of angular deflections is detected.

Alternatively or additionally, in one embodiment of an assembly according to the invention, the approach-determining device is provided with a contact sensor for detecting that an animal is in contact with the gate. Such a contact sensor is preferably disposed on either side of the gate, and can therefore detect the contact of an animal with the gate. In order to ensure that accidental contact does not generate an unlocking signal, in one embodiment of the assembly according to the invention it is preferable for the assembly to be provided with a device for detecting the duration of the contact and/or the number of times within a certain period of time that contact is made with the gate. The relevant components can therefore be set in such a way that an unlocking signal is emitted only when contact is detected for a certain minimum duration and/or there have been a certain minimum number of contacts.

If the gate is designed in such a way that in the closed position of the gate a part of the animal can stick underneath and/or through and/or over the gate, it is advantageous for the accuracy of operation of the gate if the gate-side-determining device is provided with a crossing sensor for detecting that a plane determined by the gate has been crossed by the fact that a part of the animal is sticking underneath and/or over and/or through the gate. It is precisely this crossing behaviour that proves to be an extremely accurate indication that an animal wishes to go through the gate.

Consequently, the invention also relates to an assembly of a gate for use in animal circulation, a gate-unlocking device, an unlocking-signal-generating device for generating an unlocking signal, and a first and a second area between which the gate can be disposed, the gate being designed for providing passage from the second to the first area when the gate-unlocking device is released by an unlocking signal coming from the unlocking-signal-generating device, and the gate being designed in such a way that in the closed position of the gate a part of the animal can stick underneath and/or through and/or over the gate, characterized in that the gate is provided with a crossing sensor for detecting that a part of the animal is sticking underneath and/or over and/or through the gate.

The gate-side-determining device can comprise a light sluice disposed near the gate, an animal recognition device disposed near the gate and/or a camera disposed near the gate.

It has been found that some animals are not aware that the gate has been unlocked and that they may go through the gate; these animals then remain standing in front of the gate and impede the passage. In order to encourage these animals to go through the gate, one embodiment of an assembly according to the invention is provided with an opening device for at any rate partially opening the gate at least in a direction towards the first area, which opening device is controlled by the unlocking signal. Additionally or alternatively, the unlocking signal can activate an indication-signal-generating device, in order to emit a signal that is perceptible to an animal. An animal can also be encouraged by this signal to go through the gate.

Consequently, the invention also relates to an assembly of a gate for use in animal circulation, a gate-unlocking device, an unlocking-signal-generating device for generating an unlocking signal, and a first and second area between which the gate can be disposed, the gate being designed for providing passage from the second to the first area when the gate-unlocking device is released by an unlocking signal coming from the unlocking-signal-generating device, characterized in that the assembly is provided with an opening device for at any rate partially opening the gate at least in a direction towards the first area, which opening device is controlled by the unlocking signal.

If the gate-side-determining device can be connected to a computer, and the computer is suitable for at any rate at least temporary storage of location data, the location data indicating whether the location of an animal is in the first or second area, and the unlocking signal is partly formed with the aid of the location data, an accurate operation of the gate, and consequently correct animal circulation, can be achieved.

The gate is preferably designed for providing free passage from the first to the second area at all times. Alternatively, the gate may be designed for providing passage from the first to the second area when the gate-unlocking device is released by the unlocking signal.

The invention will be explained in greater detail below with reference to exemplary embodiments illustrated in the drawing, in which:
Figure 1 shows diagrammatically in side view an embodiment of an assembly according to the invention, in which a cow is standing in front of the gate;
Figure 2 shows diagrammatically a top view of a gate of the type used in the assembly of Figure 1;
Figure 3 shows diagrammatically a front view of a gate of the type used in the assembly of Figure 1; and
Figure 4 shows diagrammatically in side view an embodiment of an assembly according to the invention, in which a cow is sticking her head through the gate.

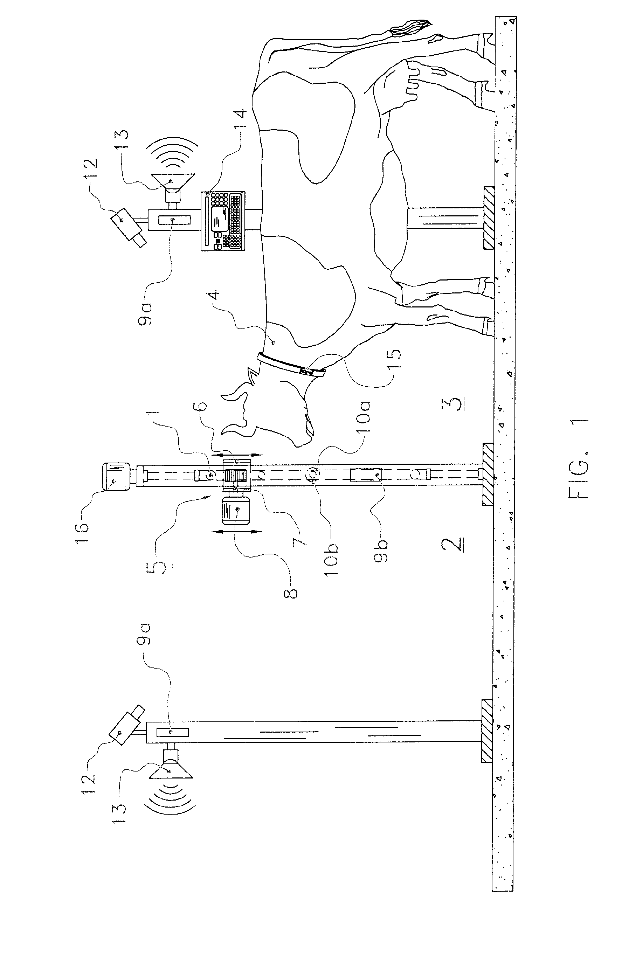

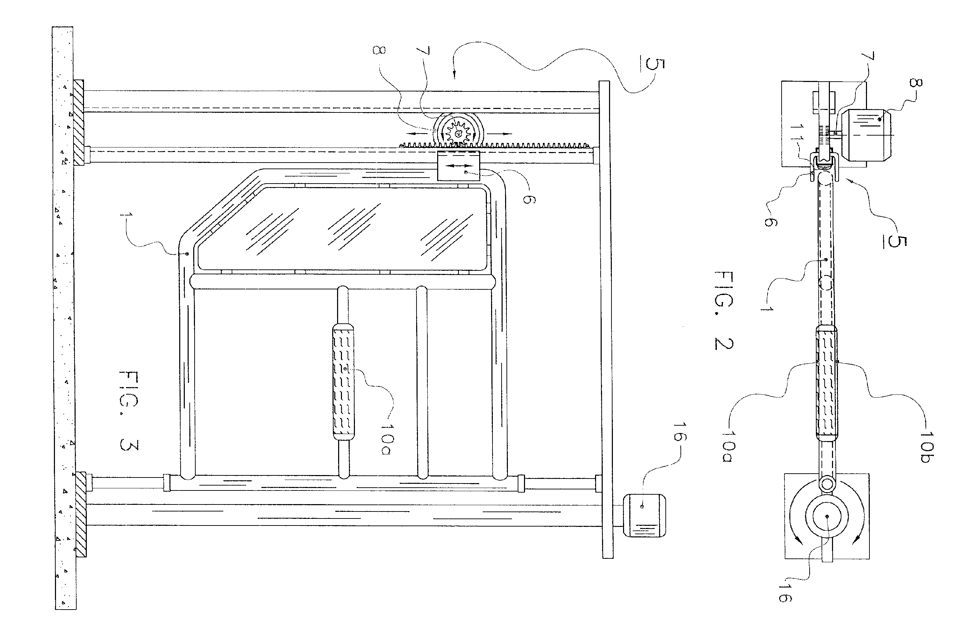

An embodiment of an assembly according to the invention is shown diagrammatically in side view in Figure 1. The assembly comprises a gate 1, placed between a first area 2 and a second area 3, which gate 1 can be passed through by an animal, in the example shown a cow 4. A gate-unlocking device 5 serves to lock and unlock the gate 1, and can be of all kinds of designs that are known per se. In the example shown, the gate-unlocking device 5 comprises a U-shaped section 6, which can be moved into and out of engagement with the gate 1 by a drive shaft 7 driven by means of a drive 8. Figure 2 shows diagrammatically a top view, and Figure 3 diagrammatically a front view of the gate 1 of the type used in the assembly of Figure 1.

As will be explained in greater detail below, an unlocking-signal-generating device generates an unlocking signal that is emitted to the gate-unlocking device 5, in particular to the drive 8, for unlocking of the gate 1. The gate 1 is designed for providing passage from the first area 2 to the second area 3 when the gate-unlocking device is released by the unlocking signal. It will, however, be clear that the gate may also be designed for providing passage from the first area to the second area at all times. In the example shown, passage from the second area 3 to the first area 2 is also provided only when the gate-unlocking device 5 is released by the unlocking signal coming from the unlocking-signal-generating device. According to the invention, the assembly is further provided with a position-determining device 9a, 9b, 10a, 10b, 11, 12 for determining the position of the cow 4 relative to the gate 1. The gate-side-determining device, here in the form of a position-determining device 9a, 9b, 10a, 10b, 11, 12, is also designed for emitting a position signal, for example to a computer 14, or directly to the gate-unlocking device 5, in particular the drive 8. In this way, the unlocking signal is at any rate at least partially determined by this position signal.

The distance from the cow 4 to the gate 1 can be determined by means of the position-determining device 9a, 9b, 10a, 10b, 11, 12. The position signal can therefore indicate whether the cow 4 is actually close to the gate 1, which is a strong indication that the cow 4 wants to go through the gate 1. In particular, the unlocking signal is emitted only when this position signal indicates that the cow 4 is within a certain minimum distance, for example approximately half a metre, from the gate 1. This means that signals coming from cows that are actually too far away from the gate 1 to make use of it can be ignored. If desired, account may be taken here of the length of time that the cow 4 is within the minimum distance.

In order to obtain an even more accurate indication of whether a cow 4 wishes to make use of the gate 1, in one embodiment of an assembly according to the invention the position-determining device 9a, 9b, 10a, 10b, 11, 12 is an approach-determining device 9a, 9b, 10a, 10b, 11, 12 for determining the direction from which the cow 4 is approaching the gate 1. Such an approach-determining device 9a, 9b, 10a, 10b, 11, 12 can provide an indication of whether a cow 4 is actually moving towards the gate 1.

Such an approach-determining device may, for example, be in the form of three animal-recognition devices 9a, 9a, 9b placed at a distance from each other, one animal-recognition device 9b being placed on the gate 1 itself, and the other two animal-recognition devices 9a being disposed on either side of the gate 1 in the relevant areas 2, 3. Owing to the fact that the signal strength received by an animal-recognition device is dependent upon the distance to a transponder 15 disposed on the cow 4 and is dependent upon the distance between them, the direction of movement of the cow 4 can be determined by comparison and combination of the signals obtained from the animal-recognition devices 9a, 9a, 9b. Such animal-recognition devices are known per se and will therefore not be described in any further detail here.

A compact assembly by means of which the direction from which the cow 4 is approaching the gate 1 can be determined is obtained by an angle sensor 11, which is integral with the gate 1. With such an angle sensor 11, it is possible to determine the direction in which the gate 1 is being pushed by the cow 4. This is a strong indication that the cow 4 wishes to go through the gate 1. In order to ensure that an accidental push against the gate 1 does not cause the angle sensor 11 to generate an unlocking signal, the angle sensor 11 can be connected to the computer 14, which determines the length of time that the angle sensor 11 detects an angular deflection in a certain direction and/or the number of times within a certain period of time that the angle sensor 11 detects an angular deflection. The relevant components can therefore be set in such a way that the computer 14 emits an unlocking signal only when an angular deflection is detected for a certain minimum duration (for example, approximately a 2-second duration) and/or an angular deflection is detected a certain minimum number of times (for example, three times).

The approach-determining device can further be provided with a contact sensor 10a, 10b for detecting that a cow 4 is in contact with the gate 1. Such a contact sensor 10a, 10b can be a pressure sensor that is known per se, but it can also be formed by a moisture detector (or thermometer or the like), since the hide of a cow in general has a moisture level (temperature or the like) that differs from that of the environment. The pressure sensors 10a, 10b are preferably disposed on either side of the gate 1, and can therefore detect the contact of a cow 4 with the gate 1. In order to ensure that accidental contact does not generate an unlocking signal, the contact sensors 10a, 10b are connected to the computer 14, which determines the length of time of the contact and/or the number of times within a certain period of time that contact is made with the gate 1. The relevant components can therefore be set in such a way that the computer 14 emits an unlocking signal only when contact is detected for a certain minimum duration (for example, approximately 2 seconds) and/or a certain minimum number of contacts (for example, 5) have been made.

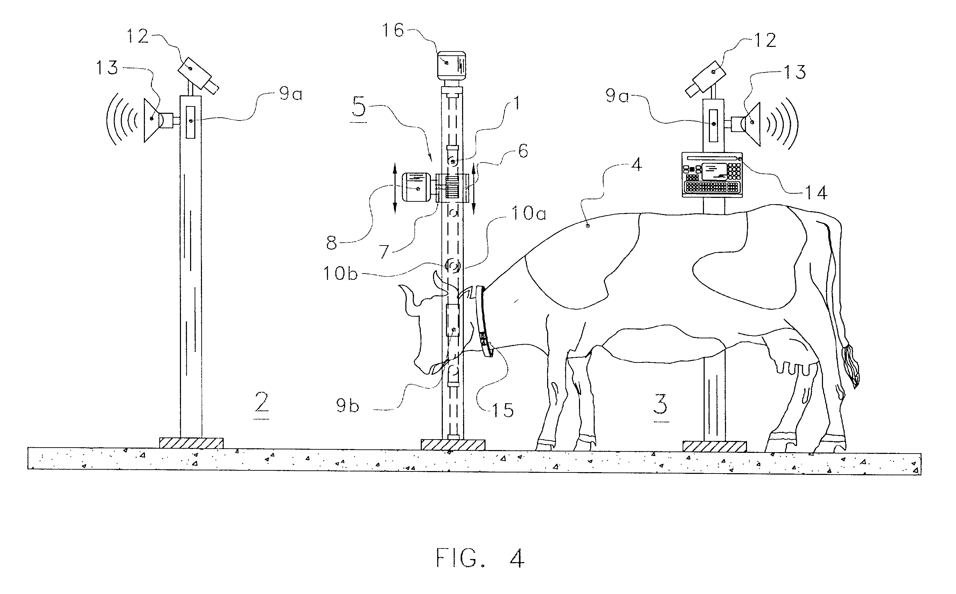

If the gate 1 is designed in such a way (Figures 3 and 4) that in the closed position of the gate 1 a part of the cow 4 can stick underneath and/or through and/or over the gate 1, it is advantageous for the accuracy of operation of the gate 1 if the position-determining device is provided with a crossing sensor for detecting that a plane determined by the gate 1 has been crossed by the fact that a part of the cow 4 is sticking underneath and/or over and/or through the gate 1. Such a crossing sensor can be in the form of, for example, a combination of animal-recognition devices 9a, 9a, 9b or of one or more cameras 12. It is precisely this crossing behaviour that proves to be an extremely accurate indication that a cow 4 wishes to go through the gate 1.

It will be clear that the invention is not limited to the sensors explicitly described and illustrated, but that other types of sensors, such as, for example, a light sluice disposed near the gate, can also be used.

It has been found that some cows are not aware that the gate 1 has been unlocked and that they may go through the gate 1. In order to encourage these cows to go through the gate 1, provision is made for an opening device 16, for example a drive motor, for at any rate partially opening the gate 1 at least in a direction towards the first area 2. The opening device 16 is controlled by the unlocking signal. Additionally or alternatively, the unlocking signal can activate an indication signal-generating device, for example a loudspeaker 13, in order to emit a signal that is perceptible to the cow 4, indicating that the gate 1 has been unlocked.

At any rate at least temporary location data can be stored in the computer 14, the location data indicating whether the location of a cow 4 is in the first area 2 or the second area 3. In this case the unlocking signal can be partly formed with the aid of the location data, so that an accurate operation of the gate 1, and consequently correct animal circulation is achieved.

It will be clear that the invention also relates to a combination of the signals coming from the various devices 9a, 9a, 9b, 10, 11, 12, in order to generate the unlocking signal. For example, an unlocking signal is generated only if both the crossing sensor detects that the gate has been crossed and also the contact sensor detects contact with the gate. Furthermore, It will be clear that, although the gate is shown in the figures as being a single gate, other forms of gates, such as the so-called Texas gates, can also be used.

## Claims

1. Assembly of a gate (1) for use in animal circulation, a gate-unlocking device (5), an unlocking-signal-generating device for generating an unlocking signal, and a first area (2) and a second area (3) between which the gate (1) can be disposed, the gate (1) being designed for providing passage from the second area (3) to the first area (2) when the gate-unlocking device (5) is released by an unlocking signal coming from the unlocking-signal-generating device, **characterized in that** the assembly is provided with a device for determining on which side of the gate (1) an animal is located, and for emitting a gate side signal, the unlocking signal being at any rate at least partially determined by the gate side signal.

2. Assembly according to Claim 1, **characterized in that** the device for determining on which side of the gate (1) an animal is located is a position-determining device for determining the position of an animal relative to the gate (1), and for emitting a position signal as gate side signal.

3. Assembly according to Claim 2, **characterized in that** the unlocking signal is emitted only when the gate side signal indicates that an animal is within a certain minimum distance from the gate (1).

4. Assembly according to one of the preceding claims, **characterized in that** the gate-side-determining device is an approach-determining device for determining the direction from which the animal is approaching the gate (1).

5. Assembly according to Claim 4, **characterized in that** the approach-determining device is an angle sensor (11) that is integral with the gate (1).

6. Assembly according to Claim 4 or 5, **characterized in that** the approach-determining device is provided with a contact sensor (10a, 10b) for detecting that an animal is in contact with the gate (1).

7. Assembly according to Claim 1, **characterized in that** the gate (1) is designed in such a way that in the closed position of the gate (1) a part of the animal can stick underneath and/or through and/or over the gate (1), and **in that** the gate-side-determining device is provided with a crossing sensor for detecting that a plane determined by the gate (1) has been crossed by the fact that a part of the animal is sticking underneath and/or over and/or through the gate (1).

8. Assembly according to one of the preceding claims, **characterized in that** the gate-side-determining device comprises a light sluice disposed near the gate (1).

9. Assembly according to one of the preceding claims, **characterized in that** the gate-side-determining device comprises an animal recognition device (9a, 9b) disposed near the gate (1).

10. Assembly according to one of the preceding claims, **characterized in that** the gate-side-determining device comprises a camera (12) disposed near the gate (1).

11. Assembly according to one of the preceding claims, **characterized in that** the assembly is provided with an opening device for at any rate partially opening the gate (1) at least in a direction towards the first area (2), which opening device is controlled by the unlocking signal.

12. Assembly according to one of the preceding claims, **characterized in that** the unlocking signal activates an indication-signal-generating device, in order to emit a signal that is perceptible to an animal.

13. Assembly according to one of the preceding claims, **characterized in that** the gate-side-determining device can be connected to a computer (14), the computer (14) being suitable for at any rate at least temporary storage of location data, the location data indicating whether the location of an animal is in the first area (2) or second area (3), and **in that** the unlocking signal is partly formed with the aid of the location data.

14. Assembly of a gate (1) for use in animal circulation, a gate-unlocking device (5), an unlocking-signal-generating device for generating an unlocking signal and a first area (2) and a second area (3) between which the gate (1) can be disposed, the gate (1) being designed for providing passage from the second area (3) to the first area (2) when the gate-unlocking device (5) is released by an unlocking signal coming from the unlocking-signal-generating device, **characterized in that** the assembly is provided with an opening device (16) for at any rate partially opening the gate (1) at least in a direction towards the first area (2), which opening device (16) is controlled by the unlocking signal.

15. Assembly of a gate (1) for use in animal circulation, a gate-unlocking device (5), an unlocking-signal-generating device for generating an unlocking signal, and a first area (2) and a second area (3) between which the gate (1) can be disposed, the gate (1) being designed for providing passage from the second area (3) to the first area (2) when the gate-unlocking device (5) is released by an unlocking signal coming from the unlocking-signal-generating device, and the gate (1) being designed in such a way that in the closed position of the gate (1) a part of the animal can stick underneath and/or through and/or over the gate (1), **characterized in that** the gate (1) is provided with a crossing sensor for detecting that a part of the animal is sticking underneath and/or over and/or through the gate (1).

16. Assembly according to one of the preceding claims, **characterized in that** the gate (1) is designed for providing free passage from the first area (2) to the second area (3) at all times.

17. Assembly according to one of the preceding Claims 1 to 15, **characterized in that** the gate (1) is designed for providing passage from the first area (2) to the second area (3) when the gate-unlocking device (5) is released by the unlocking signal.
